Europäisches Patentamt

European Patent Office

Office européen des brevets

(11) Publication number: **0 538 492 A1**

## EUROPEAN PATENT APPLICATION
## published in accordance with Art. 158(3) EPC

(21) Application number: 92909985.1

(22) Date of filing: **08.05.92**

(86) International application number:
**PCT/JP92/00584**

(87) International publication number:
**WO 92/19569 (12.11.92 92/28)**

(51) Int. Cl.5: **C04B 35/10**, C04B 35/80

(30) Priority: **09.05.91 JP 132235/91**

(43) Date of publication of application:
**28.04.93 Bulletin 93/17**

(84) Designated Contracting States:
**DE FR GB SE**

(71) Applicant: **MITSUI MINING COMPANY, LIMITED**
**1-1, Nihonbashi-Muromachi 2-chome**
**Chuo-ku Tokyo 103(JP)**

(72) Inventor: **IWANAGA, Katsusuke Mitsui Mining Co., Ltd.**
**Central Res. and Dev. Lab. 1, Koumachi**
**Tochigi-shi Tochigi 328(JP)**
Inventor: **YAMAUCHI, Jin Mitsui Mining Co., Ltd.**
**Central Res. and Dev. Lab. 1, Koumachi**
**Tochigi-shi Tochigi 328(JP)**
Inventor: **KOMATSUBARA, Yoshinobu Mitsui Mining Co., Ltd.**
**Central Res. and Dev. Lab. 1, Koumachi**
**Tochigi-shi Tochigi 328(JP)**
Inventor: **ITOU, Shinichi Mitsui Mining Co., Ltd.**
**Central Res. and Dev. Lab. 1, Koumachi**
**Tochigi-shi Tochigi 328(JP)**
Inventor: **KAWASHIMA, Teruo Mitsui Mining Co., Ltd.**
**Central Res. and Dev. Lab. 1, Koumachi**
**Tochigi-shi Tochigi 328(JP)**
Inventor: **NONAKA, Shinpei Mitsui Mining Co., Ltd.**
**Central Res. and Dev. Lab. 1, Koumachi**
**Tochigi-shi Tochigi 328(JP)**

(74) Representative: **Hering, Hartmut, Dipl.-Ing. et al**
**Patentanwälte Berendt, Leyh & Hering**
**Innere-Wiener-Strasse 20**
**W-8000 München 80 (DE)**

(54) ALUMINA-FIBER-REINFORCED CERAMIC MATERIAL AND METHOD OF MANUFACTURING SAID MATERIAL.

(57) A method of manufacturing an alumina-fiber-reinforced ceramic material which is large in filament content and strength, excellent in resistance to heat, corrosion, and thermal impact, and high in purity of alumina. Sintering is applied to a molded product obtained through the process that: filament yarns of continuous long filaments of $\alpha$-alumina with high content of alumina are impregnated with slurry in which a water-soluble aluminum compound, an acid such as acetic acid or lactic acid, and a water-soluble organic binder are dissolved and alumina powder having particles each 1 $\mu$m or smaller in primary particle diameter is dispersed; and the filament yarns impregnated with said slurry are wound around the core material and then dried. Because of filament yarns wound around the core material, a product in an intended shape and less contractible when sintered thanks to large filament content can easily be molded, whereby a fiber-reinforced ceramic material stable in quality can be obtained.

Fig. 1

TECHNICAL FIELD

This invention relates to alumina-fiber-reinforced ceramic materials having excellent heat-resistance, corrosion resistance and thermal-shock resistance, possessing a high fiber content and featuring high alumina purity; and also to their production process.

BACKGROUND ART

Ceramic materials are excellent in strength and heat resistance. However, these ceramic materials generally have low fracture toughness and thermal shock resistance in spite of their excellent strength, so that the their use as various structural members involves problems in reliability. With a view toward improving their fracture toughness and thermal shock resistance, development of ceramic-fiber-reinforced ceramic materials such as silicon-carbide-fiber-reinforced silicon nitride and silicon-carbide-fiber-reinforced alumina is under way. Ceramic-fiber-reinforced ceramic materials have heretofore been produced generally by adding ceramic fibers in the form of short fibers to a ceramic raw batch, mixing them, forming the resulting mixture and then sintering the thus-formed green body. In these processes, however, the fibers cannot be used in a large proportion in order to achieve a uniform dispersion. As a result, the reinforcing effects are small and the matrix component is contained in a large proportion, leading to such problems that substantial shrinkage takes place upon sintering and the dimensional accuracy is hence impaired.

For the production of these ceramic-fiber-reinforced ceramic materials, processes such as HIP or hot pressing which requires a high processing temperature are employed generally so that the reaction(s) between a principal component of a matrix or impurities contained in the matrix and fibers, phase transformation of fibers themselves or the like causes a strength deterioration, so that no ceramic-fiber-reinforced ceramic material of high quality has been obtained yet.

As a process making use of ceramic fibers in the form of long fibers, a process for the production of a fiber-reinforced, molded ceramic body is known in which inorganic continuous fibers are either impregnated or coated with an inorganic high molecular substance or its precursor, the fibers so treated are wound around a cylindrical base by a filament winding method and, after the substance or precursor has been solidified at least at the surfaces, the resulting fiber is sintered into the fiber-reinforced, molded ceramic body (Japanese Patent Laid-Open No. 291880/1988). The use of ceramic fibers in the form of long fibers makes it easy to impart high strength to a material to be obtained.

Employed as a matrix component in the process described above is an inorganic high molecular substance having -Si-C-, -Si-O-, -Si-N-, -Al-O- or the like as a main skeleton, or its precursor. Although carbon fibers, silicon carbide fibers, silicon nitride fibers, alumina fibers and the like are disclosed as usable inorganic continuous fibers, no particular discussion is made on the composition of usable fibers, properties of the resulting materials, and the like.

In addition, alumina fiber-glass type composite materials using long oxide fibers, which have excellent corrosion resistance to acids compared with silicon carbide fibers, have also been studied. They are, however, not satisfactory in the adhesion between fibers and a matrix component and also in the heat resistance of the matrix component.

Thus, no process has yet been developed for producing a high-alumina-fiber-reinforced ceramic material which has excellent high-temperature resistance in an oxidizing atmosphere, excellent corrosion resistance to acids and the like and a high fiber content while making use of the characteristic excellent oxidation resistance of high-purity continuous alumina fibers.

DISCLOSURE OF THE INVENTION

An object of the present invention is to provide a process for producing a continuous-long-alumina-fiber-reinforced ceramic material which was not known before, has a high fiber content, high strength, and excellent heat, corrosion and thermal shock resistance, and features a high alumina purity.

The present inventors have conducted an extensive investigation with a view toward developing a process for the production of ceramic-fiber-reinforced ceramic material of high quality. As a result, it has been found that the above object can be attained by using a continuous long alumina fiber of high purity and a slurry, which has been obtained by mixing fine alumina powder in an aqueous solution of a precursor for continuous long alumina fibers, forming a green body in accordance with a filament winding method, and then sintering the green body, leading to the completion of the invention.

Namely, the present invention provides a process for producing an alumina-fiber-reinforced ceramic material, which comprises impregnating a filament yarn of continuous long α-alumina fibers, said fibers having an alumina content of at least 90 wt.%, with a slurry as a matrix material (which contains a water-soluble aluminum compound and a water-soluble organic binder component, both dissolved therein, and alumina powder dispersed therein and having a primary particle size of 1 μm or smaller and, optionally, in a form dissolved or dispersed therein one or more of acid selected from the group consisting of hydrochloric acid and aliphatic $C_{1-4}$ carboxylic acids and/or a sintering aid in an amount of 3 wt.% or less based on the total amount of oxides after sintering), winding the slurry-impregnated filament yarn around a core of a desired shape, drying the yarn with the core, removing the core and then sintering the resultant green body.

The process of the present invention has the following advantages compared with the conventional production processes of ceramic-fiber-reinforced ceramic materials:

(1) As the forming is conducted by winding fibers, which have been impregnated with the matrix component, around a core material of any shape, a green body of a desired shape can be obtained. In addition, it is possible to produce a ceramic-fiber-reinforced ceramic material of a high fiber content, resulting in an extremely low level of shrinkage during sintering. The ceramic-fiber-reinforced ceramic material can therefore be provided with excellent dimensional accuracy.

(2) Because of the use of continuous long alumina fibers of high purity and a matrix material of the same type, a ceramic-fiber-reinforced ceramic material having high strength and excellent heat resistance, corrosion resistance and thermal shock resistance can be obtained.

BRIEF DESCRIPTION OF THE DRAWING

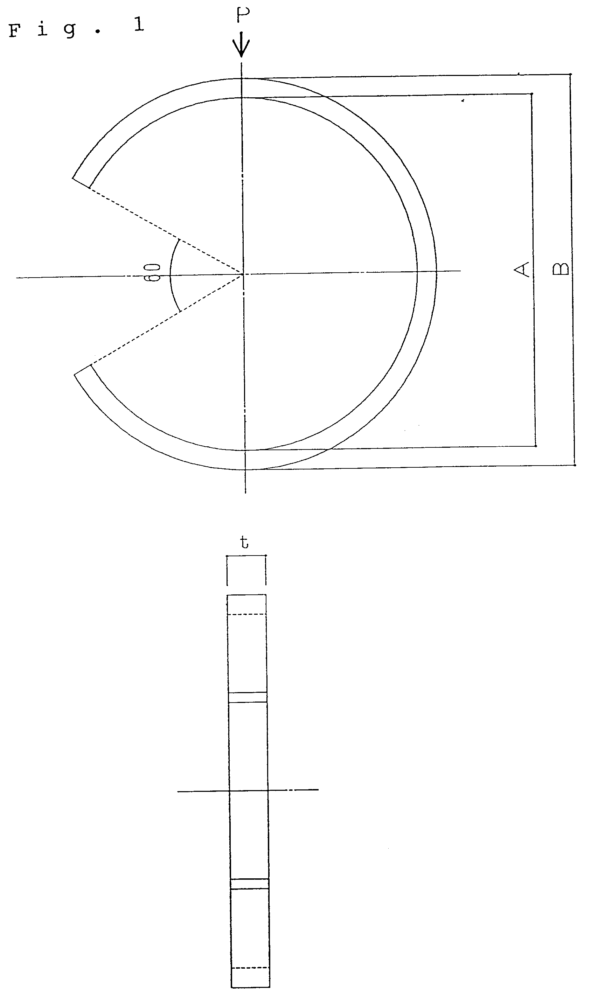

FIG. 1 is a diagram showing the shape of a test piece used for the measurement of the flexural strength of a ceramic-fiber-reinforced ceramic material.

BEST MODE FOR CARRYING OUT THE INVENTION

In the process of the present invention, long continuous α-alumina fibers having a fiber diameter of 5-25 μm and an alumina content of at least 90 wt.%, preferably at least 95 wt.% are used as reinforcing fibers.

No particular limitation is imposed on the production process of the long continuous α-alumina fibers. It is preferable, however, to adopt the below-described slurry process since long continuous α-alumina fibers of high purity can be obtained. The slurry method comprises preparing a slurry as a spinning solution, spinning the spinning solution, drying the thus-spun fibers, and then calcining and sintering the resulting precursor fibers. The slurry comprises an aqueous solvent solution of a basic aluminum salt such as basic aluminum chloride, basic aluminum nitrate, basic aluminum acetate or basic aluminum chloroacetate; powder of alumina or an aluminum compound changeable into alumina during sintering, said powder being in an amount as much as 10-40 wt.% based on the total amount of oxides in the sintered fibers and having an average particle size of 0.1 μm or smaller; and a spinning aid such as a water-soluble organic high-molecular compound or the like in an amount as much as 4-10 wt.% based on the total amount of the oxides in the sintered fibers; and optionally a sintering aid composed of one or more oxides such as CuO, MgO, $ZrO_2$, PbO, $Cr_2O_3$, $SiO_2$, $B_2O_3$ and $Fe_2O_3$ or compounds which are changeable into such oxides during sintering, said sintering aid being in an amount of 3 wt.% or less based on the total amount of the oxides in the sintered fibers.

Long continuous α-alumina fibers having an alumina content lower than 90 wt.% are not preferable, because the relative contents of components such as $SiO_2$, $Fe_2O_3$ and $B_2O_3$ which tend to deteriorate high-temperature properties become higher, resulting in deterioration in heat resistance at high temperatures of 1200°C and higher and/or in corrosion resistance in an acidic atmosphere. In addition, use of long continuous α-alumina fibers having an alumina content of at least 95 wt.% can provide ceramic-fiber-reinforced ceramic materials excellent particularly in corrosion resistance and thermal shock resistance. Fibers having a diameter smaller than 5 μm are generally difficult to produce and even if produced, the resulting fibers have poor handling property. On the other hand, fibers having a diameter greater than 25 μm are stiff and fragile, resulting in troubles such as end breakage inconveniently caused during filament winding in many instances. Such fiber diameters are therefore not preferred.

The long continuous alumina fibers used in the present invention should have the crystal form of α-alumina. If alumina fibers with the crystal form of a metastable alumina such as γ-, δ- or θ-alumina are used, the fibers react with the matrix upon sintering at high temperatures, resulting in that the fibers cannot retain their fibrous form and cannot effectively exhibit the effects of fiber reinforcement.

In the process of the present invention, the long continuous α-alumina fibers are generally used in the form of a filament yarn composed of 200-5000 filaments. When the number of filaments is smaller than 200, the resulting product does not have sufficient strength as a filament yarn, leading to poor formability upon filament winding. When the number of filaments exceeds 5000, on the other hand, it becomes difficult to fully impregnate the resultant filament yarn with a slurry.

The slurry which is employed to have the filament yarn of the long continuous $\alpha$-alumina fibers impregnated is prepared by adding, to an aqueous solution which has been formed by dissolving in water a water-soluble aluminum compound in a proportion sufficient to give an aluminum concentration of 5-30 wt.%, preferably 10-20 wt.% in terms of alumina ($Al_2O_3$), fine alumina powder having a primary particle size of 1 $\mu$m or smaller and amounting to 5-60 wt.% of the aqueous solution and, optionally, 3 wt.% or smaller, based on the total amount of oxides in the fibers after the sintering, of a sintering aid composed of one or more oxides such as $CuO$, $MgO$, $ZrO_2$, $PbO$, $Cr_2O_3$, $SiO_2$, $B_2O_3$ and $Fe_2O_3$ or compounds changeable into these oxides upon sintering; dissolving or dispersing the alumina powder and the optional sintering aid thoroughly in the solution; and then adding a water-soluble organic binder component to the resulting solution or dispersion to adjust its viscosity. Although the preparation of the slurry is not limited to the above procedures, it is preferred to add the alumina powder first and, then, the water-soluble organic binder from the viewpoints of the convenience of viscosity adjustment and homogenization of the slurry. The alumina content in the slurry may range approximately from 1 wt.% to 50 wt.%. The term "aqueous solution" will hereinafter mean an aqueous solution of a water-soluble aluminum compound whereas the term "slurry" hereinafter mean a slurry obtained by dispersing or dissolving alumina powder, a sintering aid and a water-soluble organic binder in the aqueous solution.

As the water-soluble aluminum compound, one or more of basic aluminum chloride, aluminum chloride, basic aluminum nitrate, basic aluminum acetate and basic aluminum chloroacetate can be used. Each of these water-soluble aluminum compounds exists in the form of basic polynuclear complex ions in its aqueous solution. They do not change into high molecular substances in the course of processing, do not evaporate substantially at the time of heat treatment and, moreover, can easily adjust the viscosity of the slurry easily. Among these compounds, basic aluminum chloride is particularly preferred for its reduced evaporation through thermal decomposition during sintering and its function as a good binder. To control the porosity of the resulting product for improved thermal shock resistance, on the other hand, aluminum chloride is preferred.

As alumina powder, that having a primary particle size as fine as 1 $\mu$m or smaller is preferred. Primary particle sizes greater than 1 $\mu$m make it difficult to achieve uniform impregnation of a filament yarn, tend to develop cracks in green bodies, and result in products with a rough surface and lower strength. Primary particle sizes outside the above range are, therefore, not preferred. Incidentally, the crystal form of the alumina powder usable in the process of the present invention may be any one of the $\alpha$-, $\gamma$-, $\delta$- and $\theta$-forms. Among these crystal forms, the $\gamma$-, $\delta$- and $\theta$-forms each transforms to the $\alpha$-form under certain sintering conditions. This transformation is accompanied by shrinkage although the degree of the shrinkage is only a little. In view of enhanced control of the dimensional accuracy, the strength of the product and the like, it is preferable to employ $\alpha$-alumina powder from the beginning. The term "alumina powder" as used herein should be interpreted to include alumina sol as well as aluminum compounds changeable into alumina during sintering, such as boehmite, bayerite, diaspore and pseudo-boehmite.

If the amount of aluminum powder added to the aqueous solution of the water-soluble aluminum compound is less than 5 wt.% based on the amount of the aqueous solution, shrinkage during sintering is large, resulting in deformation and/or in the formation of small cracks in the surface. No ceramic-fiber-reinforced ceramic material having high strength, therefore, can be obtained. Amounts exceeding 60 wt.%, on the other hand, lead to deteriorated sinterability and, because of a reduction in the fiber content of the ceramic-fiber-reinforced ceramic material, to reduced quality. The amounts outside the above range, therefore, are not preferred.

Addition of one or more of acid selected from hydrochloric acid and aliphatic $C_{1-4}$ carboxylic acids to the slurry lowers the viscosity of the slurry and is effective for promoting dispersion of alumina powder. These effects are remarkable particularly where alumina powder is added in an amount of 30-60 wt.% based on the aqueous solution. The acid can be added, as needed, in an amount of 5 wt.% or greater based on the alumina powder added to the slurry. Among these acids, acetic acid and lactic acid are particularly suitable for their reduced influence to the quality of the products. As an acid is added more, decomposition of a binder occurs, resulting in that the binder becomes less effective. As a consequence, the green body tends to develop more cracks during drying. It is therefore preferable to add the acid in an amount of 15 wt.% or lower based on the alumina powder added to the slurry.

In order to adjust the amount of the slurry with which a filament yarn of long continuous $\alpha$-alumina fibers are to be impregnated, it is recommended to control the viscosity of the slurry by adjusting its water content. In order to improve the integrality of fibers during filament winding and after drying so that the strength of the molded ceramic body can be increased, a water-soluble, organic binder component is added in a small amount to adjust the viscosity of the slurry. The viscosity of the slurry is preferably in a range of from 1 poise to 1500 poises, more preferably in a range of from 100 poises to 1000 poises. At a viscosity lower than 1 poise, the strength of the dried green body is low. At a viscosity greater than 1500 poises, on the other hand, the wetting of the fibers is poor, resulting in that the green body tends to contain pores. Viscosities outside the above range, therefore, are not preferred. In addition, use of the slurry in a low viscosity range is recommended to increase the fiber content of the ceramic-fiber-reinforced ceramic material, whereby a product having excellent strength can be obtained. Incidentally, the above-described viscosities are basically values as measured around 25°C.

Usable examples of the water-soluble, organic binder component include water-soluble polyethylene oxide, polyvinyl alcohol and carboxylmethylcellulose. When polyethylene oxide which is soft and also has excellent elasticity in a dry state is used out of them, the dried green body develops less cracks and good handling properties are shown upon its removal from a core. It is preferable to add the water-soluble, organic binder component in an amount of 0.1-5 wt.% based on the amount of the slurry.

Using the above-described long continuous $\alpha$-alumina fibers and alumina-powder-containing slurry, a ceramic-fiber-reinforced ceramic material is produced.

A filament yarn of long continuous $\alpha$-alumina fibers is impregnated with the above-described slurry and the impregnated filament yarn so obtained is wound around a core of a desired shape to form the green body. The core can take any shape depending on the shape of the desired product, for example, a cylindrical, square cylindrical or spherical shape. The impregnation with the slurry and the winding of the impregnated yarn around the core can be carried out in separate steps. The most efficient method is, however, to continuously pass long continuous $\alpha$-alumina fibers through the slurry to impregnate the fibers with the slurry while unwinding the fibers wound on a bobbin, and then to wind up the impregnated fibers around a rotating mandrel-like core. When winding the impregnated fibers around the core, a pressure roller can be employed. It is effective for the removal of bubbles to apply ultrasonic waves to the slurry concurrently with passage of fibers arranged in an opened flat state through the slurry during impregnation with the slurry or to squeeze the impregnated filament yarn between soft rubber rollers upon impregnation with the slurry.

To remove bubbles, prevent the occurrence of cracks during drying or sintering and improve the thermal shock resistance and strength of the product, various measure can be taken as needed including processing of a wet green body under reduced pressure, addition of an organic solvent such as methanol or ethanol to the impregnating slurry to lower its viscosity and/or adjustment of the drying velocity.

It is necessary to control the impregnation with the slurry so that the content of long continuous $\alpha$-alumina fibers in the product falls in a range of 40-90 wt.%, preferably 70-90 wt.%. Impregnation with the slurry beyond the above range results in substantial shrinkage when sintering, whereby deformation and cracks tend to occur. Impregnation less than the above level, on the other hand, makes it impossible to firmly bond the filament yarn, resulting in the production of ceramic-fiber-reinforced ceramic material with reduced strength. Impregnation outside the above range are therefore not preferred.

If long continuous $\alpha$-alumina fibers to be employed are coated with a sizing agent, it is desirable to remove the sizing agent by subjecting the fibers to heat treatment at a temperature of 600-1000°C or so before impregnating them with the slurry. It is unnecessary to remove the sizing agent completely. Remaining sizing agent does not affect physical properties of the product at all provided that its amount is about 0.1 wt.% or less based on the weight of the fibers.

Depending on the properties of a desired product, the preparation of the slurry, the impregnation of the filament yarn and the forming method can be chosen freely as described above. For example, in order to obtain a product having a fiber content as high as 70-90 wt.%, it is preferable to pass a filament yarn continuously through a slurry of a relatively low viscosity thereby impregnating the yarn with the slurry, evaporating a portion of water and then winding the yarn around a core to obtain a green body. In order to obtain a product having a fiber content as low as 40-70 wt.%, it is preferable to process a green body of a filament yarn, which has been impregnated with a slurry of a relatively high viscosity, under reduced pressure so that bubbles are eliminated.

By changing the method for the winding of the slurry-impregnated filament yarn around a core when forming, the bulk density of the resultant product can be controlled. For example, a winding method similar to the hool winding, in which a filament yarn is wound in a substantially parallel form, when winding the filament yarn around the mandrel can provide a dense product having a high bulk density. A winding method resembling the helical winding, in which filament yarns are wound in a crossed form, can provide a product having excellent thermal shock resistance although its bulk density is low.

The green body which has been obtained by winding the slurry-impregnated $\alpha$-alumina fibers around the core is dried first at 40-50°C until the slurry becomes no longer dripping, followed by further drying at 100-150°C. Alternatively, the green body may be dried by gradually raising the temperature from room temperature to 150°C. When a slurry of low viscosity is employed, it is desirable to cause a portion of the water or the like to evaporate out of the impregnated fibers before winding them around a core.

Drying conditions should be determined to avoid formation of cracks in the surface of the green body, although they vary depending on the composition of the slurry, the size and shape of the green body, and the like. During drying, particularly until the slurry no longer becomes dripping, it is desirable to conduct the drying while slowly rotating the green body.

After the drying, the core is removed and the dried green body so obtained is sintered. It is also possible to conduct some adjustment on the shape of the green body by removing the core after the green body has been dried to such an extent as permitting the maintenance of its shape. Sintering can be conducted in the following manner. First, the dried green body is gradually heated from room temperature to about 500-800°C, thereby eliminating volatile components. The heating rate at this time is desirably in a range of 20-200°C/hour, although it varies depending on the size of the green body. After the volatile components have been eliminated, the green body is sintered further at 1000-1500°C, whereby a ceramic-fiber-reinforced ceramic material is obtained as a final product. If necessary, the core can be removed after the sintering.

The ceramic-fiber-reinforced ceramic material obtained according to the process of the present invention has a high fiber content, that is, contains high-purity alumina fibers in a proportion of at least 40 wt.%, said fibers having an alumina content of at least 90 wt.%. Compared with green bodies available by conventional processes, the green body produced according to the present invention is thinner, has higher strength and better heat resistance, corrosion resistance and thermal shock resistance. It is hence a ceramic-fiber-reinforced ceramic material suitable, for example, for use in a heat exchanger or as a fuel feed pipe for a boiler.

According to the process of the present invention, ceramic fibers which have already been sintered are sintered together with a binder component so that the sintering shrinkage is small. In addition, ceramic-fiber-reinforced ceramic materials of a desired shape can be produced efficiently without fluctuations in quality because their green bodies are each obtained by winding such fibers around a core having a shape approximating the final products.

EXAMPLES

The present invention will hereinafter be described more specifically by the following examples.

The kinds and amounts of raw materials employed in the preparation of slurries used for the impregnation of long continuous alumina fibers, the viscosities of the resulting slurries at 25°C and the alumina contents of the impregnating slurries as expressed in terms of the oxide are collectively shown in Tables 1 and 2.

In addition, impregnating, forming and sintering conditions upon impregnating long continuous alumina fibers with the slurries prepared under the conditions described above, forming the impregnated fibers and sintering the resultant green bodies as well as properties of fiber-reinforced materials so obtained are both summarized in Tables 3 and 4. Incidentally, as reinforcing fibers, long continuous $\alpha$-alumina fibers having an alumina content of 99.5 wt.% were used and the fiber content of each ceramic-fiber-reinforced ceramic material was calculated from the weight of the continuous alumina fibers employed and the weight of the ceramic-fiber-reinforced ceramic material obtained.

The flexural strength of each ceramic-fiber-reinforced ceramic material was determined in the following manner. When the material is in a cylindrical shape, it was machined into such a test piece as shown in FIG. 1 (in the form of a C ring of 10 mm in thickness cut off over an angle of 60 degrees relative to the center thereof). To the test piece, load was applied at a crosshead speed of 5 mm/min by using a flexural tester ("Autograph DSC-2000", manufactured by Shimadzu Corporation) and the maximum fracture stress ($\sigma$) was calculated as flexural strength in accordance with the following equation:

$$\sigma = \frac{P}{N \times t} \left( 3 \times b - \frac{a^2 \times b^2}{b^2} - \frac{a^2 + b^2}{b} \right) \times 9.80665 \quad (MPa)$$

where
  P:    maximum load (kg),

7

a: half of the inner diameter (A) of the ring (inner radius) (mm),
b: half of the outer diameter (B) of the ring (outer radius) (mm),
t: thickness of the ring, and

$$N = a^2 - b^2 + (a^2 + b^2) \times l_n \left(\frac{b}{a}\right).$$

(Example 1)

(Preparation of impregnating slurry)

To a solution of 150 g (82.65 g as an alumina content expressed in terms of the oxide) of basic aluminum chloride 2.4 hydrate in 300 g of water, 100 g (100 g as an alumina content expressed in terms of the oxide) of δ-alumina powder having an average particle size of 0.1 $\mu$m were added, followed by the stirring and dispersion of the resultant mixture for 30 minutes. Under further stirring, 15 g of polyethylene oxide having an average molecular weight of 1,000,000 were gradually added to the resulting dispersion and dissolved therein. In order to adjust the viscosity of the resultant slurry to a level suitable for impregnation, water was added to the thus-obtained slurry to adjust its viscosity to 1,000 poises as measured at 25°C, whereby an impregnating slurry was prepared. The alumina content of the impregnating slurry was 32.3 wt.% as expressed in terms of the oxide.

(Impregnation with slurry and forming)

As reinforcing fibers, long continuous $\alpha$-alumina fibers (filament yarn) consisting of 1000 filaments, said filaments having an alumina content of 99.5 wt.% and a diameter of 10 $\mu$m, were used. Five long filament yarns, which had been subjected to yarn doubling, were continuously passed through the impregnating slurry to impregnate them with the impregnating slurry. The doubled yarn so impregnated was fed between squeezing nip rollers and then wound around a cylindrical mandrel of 100 mm in outer diameter over 290 m to a width of 250 mm at a speed of 10 m per minute in a manner similar to the hoop winding method, whereby the doubled yarn was formed into a cylindrical shape.

(Sintering)

After drying, the dried cylindrical green body was removed from the mandrel, heated to 500°C at a heating rate of 60°C/hour in an electric furnace, maintained at the same temperature for one hour, heated further to 1300°C at a heating rate of 100°C/hour and then maintained at the same temperature for 2 hours, whereby the green body was sintered.

(Properties of fiber-reinforced material)

The sintered body was thereafter gradually cooled to room temperature, whereby a cylindrical ceramic-fiber-reinforced ceramic material having an inner diameter of 100 mm, an outer diameter of 105 mm, a thickness of 2.5 mm and a length of 250 mm was obtained. The ceramic-fiber-reinforced ceramic material so obtained had a fiber content of about 58 wt.%. As a result of X-ray diffraction, it was found to be composed of $\alpha$-alumina phase in its entirety. In addition, the material had a bulk density of 3.7 g/cm$^3$, flexural strength of 182 MPa and a water-absorption rate of 0.6%. Thus, it was found that the sintered body so obtained was dense and had excellent strength.

(Example 2)

In a similar manner to Example 1 except that long continuous $\alpha$-alumina fibers having a filament diameter of 20 $\mu$m were used as reinforcing fibers and the wound length of the doubled yarn upon forming was increased to 487 m, a ceramic-fiber-reinforced ceramic material having an inner diameter of 100 mm, an outer diameter of 130 mm, a thickness of 15 mm and a length of 250 mm was obtained. The material so obtained had a fiber content of about 58 wt.%. As a result of X-ray diffraction, it was found to be composed

of an $\alpha$-alumina phase in its entirety. In addition, the material had a bulk density of 3.7 g/cm$^3$, flexural strength of 192 MPa and a water absorption rate of 0.4%. Thus, it was found that the sintered body so obtained was dense and had excellent strength.

(Example 3)

In a similar manner to Example 1 except that sintering was conducted by heating the green body to 700°C at a heating rate of 50°C/hour, maintaining it at the same temperature for one hour, heating it further to 1100°C at a heating rate of 100°C/hour and then maintaining it at the same temperature for one hour, a ceramic-fiber-reinforced ceramic material having an inner diameter 100 mm, an outer diameter of 105 mm, a thickness of 2.5 mm and a length of 250 mm was obtained. The material so obtained had a fiber content of about 63 wt.%. As a result of X-ray diffraction, it was found to be composed of $\gamma$- and $\delta$-alumina phases. In addition, the material had a bulk density of 3.2 g/cm$^3$, flexural strength of 116 MPa and a water-absorption rate not greater than 0.1%r. Thus, it was found that the sintered body so obtained was dense and had excellent strength.

(Examples 4 and 5)

In accordance with the procedures of Example 1, an impregnating slurry having an alumina content of 23.1 wt.% and a viscosity of 400 poises at 25°C and that having an alumina content of 22.1 wt.% and a viscosity of 860 poises at 25°C were prepared in Example 4 and Example 5, respectively. In Example 5, an alumina sol having an alumina content of 10 wt.% as expressed in terms of the oxide was employed instead of the water and alumina powder. In a similar manner to Example 1 except that the mandrel was replaced by that having a square cylindrical shape and, in Example 5, the wound length upon forming was increased to 300 m, ceramic-fiber-reinforced ceramic materials in the form of a square cylindrical shape were obtained, respectively. As a result of X-ray diffraction, they were each found to be composed of an $\alpha$-alumina phase. Their fiber contents were about 80 wt.% and about 65 wt.%, respectively. Both of them had a bulk density of 3.8 g/cm$^3$, and their water absorption rates were of 0.1% or smaller and 0.3%, respectively. Thus, it was found that the sintered bodies so obtained were dense.

(Example 6)

(Preparation of impregnating slurry)

To a solution obtained by dissolving 439.5 g of basic aluminum chloride 2.4 hydrate and 36.8 g of aluminum chloride hexahydrate in 344.5 g of water, 15.28 g of acetic acid and 3.32 g of lactic acid were added and mixed. To the resulting solution, 4.20 g of magnesium chloride hexahydrate were added as a sintering aid. Then, 100 g of $\delta$-aluminum powder having an average particle size of 0.1 $\mu$m were added to the resulting mixture, followed by stirring for one hour to disperse the powder therein. Under further stirring, 56.6 g of polyethylene oxide having an average molecular weight of 900,000 were gradually added and dissolved in the resulting mixture. In order to adjust the viscosity of the resulting slurry to a level suited for impregnation, water was added to the thus-obtained slurry to adjust its viscosity to 1100 poises as measured at 25°C, whereby an impregnating slurry was prepared. The impregnating slurry so obtained had an alumina content of 34.0 wt.% as expressed in terms of the oxide.

(Impregnation with slurry, and forming)

As reinforcing fibers, long continuous $\alpha$-alumina fibers (filament yarn) consisting of 1000 filaments, said filaments having an alumina content of 99.5 wt.% and a diameter of 10 $\mu$m, were employed. The fibers were continuously passed through the slurry to impregnate them with the impregnating slurry, fed through an opener, passed through a heat drier set in advance to an atmosphere of 120°C or so by hot wind, and then fed by way of a traverser. The so-impregnated fibers were then wound around a cylindrical mandrel of 82 mm in outer diameter to a width of 250 mm over 1080 m at a winding velocity of 2.0-3.0 m/min in a manner similar to the helical winding method, whereby the fibers were formed into a cylindrical shape.

(Sintering)

After drying, the dried cylindrical green body was removed from the mandrel, followed by the measurement of its water content. The water content of the dried green body was found to be less than 1 wt.%. The dried green body was heated in an electric furnace to 250°C at a heating rate of 24°C/hour, maintained at the same temperature for 2 hours, heated further to 640°C at a heating rate of 24°C/hour, maintained at the same temperature for 2 hours, heated still further to 1450°C at a heating rate of 96°C/hour, and then maintained at the same temperature for 3 hours. Thus, the green body was sintered.

(Properties of the fiber-reinforced material)

The sintered body so obtained was cooled gradually to room temperature, whereby a cylindrical ceramic-fiber-reinforced ceramic material having an inner diameter of 82 mm, an outer diameter of 88 mm, a thickness of 3 mm and a length of 240 mm was obtained. The ceramic-fiber-reinforced ceramic material so obtained had a fiber content of about 78 wt.%. As a result of X-ray diffraction, it was found to be composed of $\alpha$-alumina phase in its entirety. In addition, the material had a bulk density of 2.2 $g/cm^3$ and flexural strength of 28.0 MPa. It has hence been found that a thin, high-strength, ceramic-fiber-reinforced ceramic material can be obtained even if its bulk density is low.

(Example 7)

In a similar manner to Example 6 except for the omission of aluminum chloride hexahydrate and lactic acid, an impregnating slurry having a viscosity (at 25°C) of 110 poises and an alumina content of 24.1 wt.% was prepared under the conditions shown in Table 2.

As reinforcing fibers, long continuous $\alpha$-alumina fibers (filament yarn) consisting of 1000 filaments having an alumina content of 99.5 wt.% and a diameter of 10 $\mu$m were employed. The reinforcing fibers were continuously passed through the impregnating slurry to impregnate the same. After the impregnated fibers so obtained were passed through an opener and then through a heat drier set in advance to a temperature atmosphere of about 130°C by a hot wind, they were passed by way of a traverser and then wound around a cylindrical mandrel of 82 mm in outer diameter to a width of 230 mm over 1200 m at a winding velocity of 1.5-2.0 m/min. Thus the fibers were formed into a cylindrical shape. The cylindrical green body was placed in a closed container and the pressure in the container was gradually reduced until the vacuum level of the container dropped to 1333-1600 Pa. After it was maintained under the same conditions for 2 hours, the vacuum level was gradually reduced until the internal pressure of the container returns to the spheric pressure. The green body so obtained had a water content of 11 wt.%, and no cracks were observed therein.

After the cylindrical green body had been dried, the cylindrical green body so dried was removed from the mandrel and then heated in an electric furnace to 640°C at a heating rate of 96°C/hour, maintained at the same temperature for 2 hours, heated further to 1450°C at a heating rate of 96°C/hour and then maintained at the same temperature for 3 hours, whereby the green body was sintered.

The sintered body was gradually cooled to room temperature, whereby a cylindrical ceramic-fiber-reinforced ceramic material having an inner diameter of 82 mm, an outer diameter of 89 mm, a thickness of 3.5 mm and a length of 224 mm was obtained. The material so obtained had a fiber content of about 83 wt.%. As a result of X-ray diffraction, the material was found to be composed of $\alpha$-alumina phase in its entirety. In addition, the material had a bulk density of 2.1 $g/cm^3$ and flexural strength of 43.7 MPs.

It has therefore been found that, even when the viscosity of an impregnating slurry is lowered to increase the fiber content of a ceramic-fiber-reinforced ceramic material as described above, depressurization still makes it possible to provide the material with excellent strength.

(Example 8)

In a similar manner to Example 6 except that methanol was added upon preparation of the impregnating slurry, an impregnating slurry having a viscosity (at 25°C) of 1.5 poises and an alumina content of 9.1 wt.% was prepared under the conditions shown in Table 2.

As reinforcing fibers, long continuous $\alpha$-alumina fibers (filament yarn) consisting of 1000 filaments having an alumina content of 99.5 wt.% and a diameter of 10 $\mu$m were employed. The fibers were continuously passed through the impregnating slurry to impregnate them with the impregnating slurry, fed through an opener, passed through a heat drier set in advance to a temperature atmosphere of about 25-30°C by ventilation, by a traverser, and then wound around a cylindrical mandrel of 82 mm in outer diameter to a width of 230 mm over 952 m at a winding velocity of 3.3-4.5 m/hour, whereby the impregnated fibers were formed into a cylindrical shape.

After the cylindrical green body had been dried, the cylindrical green body so dried was removed from the mandrel and then heated in an electric furnace to 250°C at a heating rate of 24°C/hour, maintained at the same temperature for 2 hours, heated further to 1450°C at a heating rate of 96°C/hour and then maintained at the same temperature for 3 hours, whereby the green body was sintered.

The sintered body so obtained was cooled to room temperature, whereby a cylindrical ceramic-fiber-reinforced ceramic material having an inner diameter of 82 mm, an outer diameter of 87 mm, a thickness of 2.5 mm and a length of 228 mm was obtained. The material so obtained had a fiber content of about 87 wt.%. As a result of X-ray diffraction, it was found to be composed of $\alpha$-alumina phase in its entirety. In addition, it was found that the material had a bulk density of 2.1 g/cm$^3$, a water absorption rate of 20.5 % and flexural strength of 35.6 MPa.

Thus, it has been found that use of an alcohol in preparation of an impregnating slurry makes it possible to lower the viscosity of the slurry, to conduct easy drying of a green body at a temperature around room temperature and to provide a product having excellent strength and a high fiber content.

The ceramic-fiber-reinforced ceramic material which had been obtained by the above procedures and had the flexural strength of 35.6 MPa was subjected to a sudden temperature change, and the difference in flexural strength between before and after the temperature change was measured to determine the thermal shock resistance of that material. Namely, a 10 mm-wide ring-shaped sample was cut out from the fiber-reinforced material so obtained. The ring-shaped sample was placed in an electric furnace, maintained at a predetermined temperature, and left there for 3 hours. The material was then taken out of the furnace and allowed to stand until its temperature dropped to room temperature. This treatment was repeated three times. The sample was then machined into a shape suitable for a flexural test and its flexural strength was then determined. The results are shown in Table 5.

It was found that there was no substantial deterioration in flexural strength after the application of the thermal shock and the material had excellent thermal shock resistance.

(Example 9)

In a similar manner and under similar conditions to Example 8 except that 50 g of ethanol were added further upon preparation of the impregnating slurry and the winding velocity upon forming was decreased to 2.5-3.6 m/min, a cylindrical ceramic-fiber-reinforced ceramic material having an inner diameter of 82 mm and an outer diameter of 87 mm, a thickness of 2.5 mm and a length of 230 mm was obtained. The material so obtained had a fiber content of about 84 wt.%. As a result of X-ray diffraction, it was found to be composed of $\alpha$-alumina phase in its entirety. In addition, the material had a bulk density of 2.0 g/cm$^3$, a water absorption rate of 20.0% and flexural strength of 36.0 MPa.

As a result of measurement of the thermal shock resistance of the thus-obtained ceramic-reinforced ceramic material having the flexural strength of 36.0 MPa as in Example 8, it was found, as shown in Table 5, that the material had excellent thermal shock resistance with no substantial strength deterioration after the application of the thermal shock.

(Example 10)

In a similar manner to Example 7 except that 6.18 g of aluminum chloride hexahydrate were added to the impregnating slurry when prepared, $\alpha$-alumina powder having an average particle size of 0.9 $\mu$m was employed and the depressurization after forming was omitted, a cylindrical ceramic-fiber-reinforced ceramic material having an inner diameter of 82 mm, an outer diameter of 88 mm, a thickness of 3 mm and a length of 225 mm was obtained. The material so obtained had a fiber content of about 79 wt.%. As a result of X-ray diffraction, it was found to be composed of $\alpha$-alumina phase in its entirety. In addition, the material had a bulk density of 2.5 g/cm$^3$, a water absorption rate of 15.7 wt.% and flexural strength of 52.1 MPa.

As has been demonstrated above, the strength of a final product can be improved by employing alumina powder whose crystal form is $\alpha$-phase.

CAPABILITY OF EXPLOITATION IN INDUSTRY

Alumina-fiber-reinforced ceramic materials according to the present invention have a high fiber content, feature a high alumina purity and have excellent heat-resistance, corrosion resistance and thermal shock resistance. The shape of each final product can be designed as desired so that a thin-wall product can be obtained. They are therefore useful as high-temperature heat-resistant materials for thermal exchangers and also anti-corrosive materials in a corrosive atmosphere such as an acid.

Table 1

| Example No. | | Unit | 1 | 2 | 3 | 4 | 5 |
|---|---|---|---|---|---|---|---|
| Variable | | Unit | Amount added during slurry preparation | | | | |
| Basic aluminum chloride 2.4 hydrate | | g | 150 | 150 | 150 | 100 | 150 |
| Water | | g | 300 | 300 | 300 | 300 | 0 |
| Alumina powder | | g | 100 | 100 | 100 | 50 | 400* |
| | Crystal form | - | δ | δ | δ | δ | - |
| | Average particle size | μm | 0.1 | 0.1 | 0.1 | 0.02 | - |
| Polyethylene oxide | | g | 15 | 15 | 15 | 5 | 5 |
| | Average molecular weight | x 10⁴ | 100 | 100 | 100 | 100 | 150 |
| Viscosity of slurry (25°C) | | poise | 1000 | 1000 | 1000 | 400 | 860 |
| Alumina content of slurry | | wt.% | 32.3 | 32.3 | 32.3 | 23.1 | 22.1 |

*: An alumina sol (alumina content: 10 wt.%) was used instead of alumina powder.

Table 2

| Example No. | | Unit | 6 | 7 | 8 | 9 | 10 |
|---|---|---|---|---|---|---|---|
| Variable | | Unit | Amount added during slurry preparation | | | | |
| Basic aluminum chloride 2.4 hydrate | | g | 439.5 | 342.1 | 293.0 | 293.0 | 342.1 |
| Aluminum chloride hexahydrate | | g | 36.8 | 0 | 24.5 | 24.5 | 6.18 |
| Water | | g | 344.5 | 797.0 | 563.5 | 563.5 | 797.0 |
| Acetic acid | | g | 15.28 | 17.0 | 10.19 | 10.19 | 17.0 |
| Lactic acid | | g | 3.32 | 0 | 2.21 | 2.21 | 0 |
| Magnesium chloride hexahydrate | | g | 4.20 | 6.18 | 2.80 | 2.80 | 6.18 |
| Alumina powder | | g | 100 | 150 | 66.50 | 66.50 | 150 |
| | Crystal form | - | δ | δ | δ | δ | α |
| | Average particle size | μm | 0.1 | 0.1 | 0.1 | 0.1 | 0.9 |
| Polyethylene oxide | | g | 56.6 | 29.0 | 37.3 | 37.3 | 29.0 |
| | Average molecular weight | x 10⁴ | 90 | 85 | 100 | 100 | 85 |
| Methanol | | g | 0 | 0 | 1485 | 1485 | 0 |
| Ethanol | | g | 0 | 0 | 0 | 50 | 0 |
| Viscosity of slurry (25°C) | | poise | 1100 | 110 | 1.5 | 1.0 | 100 |
| Alumina content of slurry | | wt.% | 34.0 | 24.1 | 9.1 | 9.0 | 24.1 |

[Table 3-1]

| Variable | | Unit | 1 | 2 | 3 | 4 | 5 |
|---|---|---|---|---|---|---|---|
| Example No. | | | | | | | |
| Variable | | Unit | Conditions, characteristic values, etc. | | | | |
| Reinforcing fibers | Diameter | μm | 10 | 20 | 10 | 10 | 10 |
| Reinforcing fibers | Used form | - | Doubling of 5 filament yarns (made of 1000 filaments per yarn) | Doubling of 5 filament yarns (made of 1000 filaments per yarn) | Doubling of 5 filament yarns (made of 1000 filaments per yarn) | Doubling of 5 filament yarns (made of 1000 filaments per yarn) | Doubling of 10 filament yarns (made of 1000 filaments per yarn) |
| Winding conditions | Shape of mandrel | - | Cylinder (outer diameter: 100 mm) | Cylinder (outer diameter: 100 mm) | Cylinder (outer diameter: 100 mm) | Square pillar (external dimensions: 80 mm square) | Square pillar (external dimensions: 80 mm square) |
| Winding conditions | Winding velocity | m/min | 10 | 10 | 10 | 10 | 10 |
| Winding conditions | Wound width | mm | 250 | 250 | 250 | 250 | 250 |
| Winding conditions | Wound yarn length | m | 290 | 487 | 1200 | 1200 | 300 |
| Winding conditions | Drying temperature after winding | °C | - | - | - | - | - |

[Table 3-2]

| Example No. | | | 1 | 2 | 3 | 4 | 5 |
|---|---|---|---|---|---|---|---|
| Variable | | Unit | Conditions, characteristic values, etc. | | | | |
| Sintering Conditions | Temperature - Time (Heating rate) | °C-hr ; (°C/hr) | 500 - 1 (60) 1300 - 2 (100) | 500 - 1 (60) 1300 - 2 (100) | 700 - 1 (50) 1100 - 1 (100) | 500 - 1 (60) 1300 - 2 (100) | 500 - 1 (60) 1300 - 2 (100) |
| Properties of ceramic-fiber-reinforced ceramic material | Shape | - | Hollow Cylinder | Hollow Cylinder | Hollow Cylinder | Hollow square pillar | Hollow square pillar |
| | Dimensions — External dimension | mm | 105 | 130 | 105 | 92 | 86 |
| | Dimensions — Thickness | mm | 2.5 | 15 | 2.5 | 6 | 3 |
| | Dimensions — Length | mm | 250 | 250 | 250 | 250 | 250 |
| | Fiber content | wt.% | ca. 58 | ca. 58 | ca. 63 | ca. 80 | ca. 65 |
| | Crystal phase | - | α | α | γ and δ | α | α |
| | Bulk density | g/cm$^3$ | 3.7 | 3.7 | 3.2 | 3.8 | 3.8 |
| | Water absorption rate | % | 0.6 | 0.4 | 0.3 | 0.1 or lower | 0.3 |
| | Strength | MPa | 182 | 192 | 116 | - | - |

14

[Table 4-1]

| Variable | | Unit | 6 | 7 | 8 | 9 | 10 |
|---|---|---|---|---|---|---|---|
| Example No. | | | | | | | |
| Variable | | Unit | Conditions, characteristic values, etc. | | | | |
| Reinforcing fibers | Diameter | μ m | 10 | 10 | 10 | 10 | 10 |
| | Used form | - | Filament yarn (made of 1000 filaments per yarn) | Filament yarn (made of 1000 filaments per yarn) | Filament yarn (made of 1000 filaments per yarn) | Filament yarn (made of 1000 filaments per yarn) | Filament yarn (made of 1000 filaments per yarn) |
| Winding conditions | Shape of mandrel | - | Cylinder (outer diameter: 82 mm) | Cylinder (outer diameter: 82 mm) | Cylinder (outer diameter: 82 mm) | Cylinder (outer diameter: 82 mm) | Cylinder (outer diameter: 82 mm) |
| | Winding velocity | m/min | 2.0-3.0 | 1.5-2.0 | 3.3-4.5 | 2.5-3.6 | 1.5-2.0 |
| | Wound width | mm | 250 | 230 | 230 | 230 | 230 |
| | Wound yarn length | m | 1800 | 1200 | 952 | 1070 | 1200 |
| | Drying temperature after winding | °C | 120 | 130 | 25-30 | 25-30 | 130 |

EP 0 538 492 A1

[Table 4-2]

| Example No. | | | 6 | 7 | 8 | 9 | 10 |
|---|---|---|---|---|---|---|---|
| | | Unit | Conditions, characteristic values, etc. | | | | |
| Sintering Conditions | | Temperature - Time<br><br>(Heating rate) | °C-hr<br><br>(°C/hr) | 250 - 2 (24)<br>640 - 2 (24)<br>1450 - 3 (96) | 640 - 2 (96)<br>1450 - 3 (96) | 250 - 2 (24)<br><br>1450 - 3 (96) | 250 - 2 (24)<br><br>1450 - 3 (96) | 640 - 2 (96)<br>1500 - 3 (120) |
| Properties of ceramic-fiber-reinforced ceramic material | | Shape | - | Cylinder | Cylinder | Cylinder | Cylinder | Cylinder |
| | Dimensions | External dimension | mm | 88 | 89 | 87 | 87 | 88 |
| | | Thickness | mm | 3 | 3.5 | 2.5 | 2.5 | 3 |
| | | Length | mm | 240 | 224 | 228 | 230 | 225 |
| | Fiber content | | wt.% | ca. 78 | ca. 83 | ca. 87 | ca. 84 | ca. 79 |
| | Crystal phase of matrix | | - | α | α | α | α | α |
| | Bulk density | | g/cm$^3$ | 2.2 | 2.1 | 2.1 | 2.0 | 2.5 |
| | Water absorption rate | | % | - | - | 20.5 | 20.0 | 15.7 |
| | Strength | | MPa | 28.0 | 43.7 | 35.6 | 36.0 | 52.1 |

Table 5

| Treatment temperature (°C) | Flexural strength after thermal shock (MPa) | |
|---|---|---|
| | Example 8 | Example 9 |
| Untreated | 35.6 | 36.0 |
| 1000 | 47.3 | 34.5 |
| 1100 | 39.4 | 37.3 |
| 1200 | 38.0 | 35.8 |
| 1300 | 45.7 | 30.2 |
| 1400 | 39.7 | 36.5 |
| 1500 | 37.6 | - |

**Claims**

1.  A process for producing an alumina-fiber-reinforced ceramic material, which comprises impregnating a filament yarn of long continuous $\alpha$-alumina fibers with a slurry, said fibers having an alumina content of at least 90 wt.% and said slurry comprising a water-soluble aluminum compound and a water-soluble organic binder component, both dissolved therein, and alumina powder of a primary particle size not greater than 1 $\mu$m dispersed therein, winding the slurry-impregnated filament yarn around a core of a desired shape, drying the resultant green body and then sintering the dried green body.

2.  A process for producing an alumina-fiber-reinforced ceramic material, which comprises impregnating a filament yarn of long continuous $\alpha$-alumina fibers with a slurry, said fibers having an alumina content of at least 90 wt.% and said slurry comprising a water-soluble aluminum compound, one or more of acid selected from the group consisting of hydrochloric acid and aliphatic $C_{1-4}$ carboxylic acids and a water-soluble organic binder component, all dissolved therein, and alumina powder of a primary particle size not greater than 1 $\mu$m dispersed therein, winding the slurry-impregnated filament yarn around a core of a desired shape, drying the resultant green body and then sintering the dried green body.

3.  The process of claim 1 or 2, wherein the water-soluble aluminum compound is at least one compound selected from the group consisting of basic aluminum chloride, aluminum chloride, basic aluminum nitrate, basic aluminum acetate and basic aluminum chloroacetate.

4.  The process of claim 1 or 2, wherein the water-soluble organic binder is at least one water-soluble organic compound selected from the group consisting of polyethylene oxide, polyvinyl alcohol and carboxymethylcellulose.

5.  The process of claim 2, wherein the acid selected from the group consisting of hydrochloric acid and the aliphatic $C_{1-4}$ carboxylic acids is added in an amount of 5-15 wt.% based on the weight of the alumina powder.

6.  An alumina-fiber-reinforced ceramic material obtained by the process of claim 1 or 2, which comprises 40-90 wt.% of high-purity alumina fibers having an alumina content of at least 90 wt.%.

F i g .  1

## INTERNATIONAL SEARCH REPORT

International Application No PCT/JP92/00584

**I. CLASSIFICATION OF SUBJECT MATTER** (if several classification symbols apply, indicate all) [6]

According to International Patent Classification (IPC) or to both National Classification and IPC

Int. Cl[5]   C04B35/10, C04B35/80

**II. FIELDS SEARCHED**

| Minimum Documentation Searched [7] | |
|---|---|
| Classification System | Classification Symbols |
| IPC | C04B35/10, C04B35/80 |

Documentation Searched other than Minimum Documentation
to the Extent that such Documents are Included in the Fields Searched [8]

| | |
|---|---|
| Jitsuyo Shinan Koho | 1926 - 1992 |
| Kokai Jitsuyo Shinan Koho | 1971 - 1992 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 63-291880 (Teijin Ltd.), November 29, 1988 (29. 11. 88), (Family: none) | 1-6 |
| A | JP, A, 63-233084 (Sumitomo Electric Industries, Ltd.), September 28, 1988 (28. 09. 88), (Family: none) | 1-6 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 22, 1992 (22. 05. 92) | June 9, 1992 (09. 06. 92) |
| International Searching Authority | Signature of Authorized Officer |
| Japanese Patent Office | |

Form PCT/ISA/210 (second sheet) (January 1985)